# EUROPÄISCHE PATENTSCHRIFT

(11) **EP 4 321 379 B1**
(45) Veröffentlichungstag und Bekanntmachung des Hinweises auf die Patenterteilung: **04.03.2026**
(21) Anmeldenummer: 23189371.0
(22) Anmeldetag: 03.08.2023
(51) Int. Cl.: B60N 2/90

(54) **SITZANORDNUNG FÜR EIN PERSONENTRANSPORTMITTEL**
SEAT ASSEMBLY FOR A MEANS OF PASSENGER TRANSPORT
AGENCEMENT DE SIÈGE POUR UN MOYEN DE TRANSPORT DE PERSONNES

(30) Priorität: 09.08.2022 DE 102022120019
(43) Veröffentlichungstag der Anmeldung: 14.02.2024
(73) Patentinhaber: GRAMMER AG, 92289 Ursensollen (DE)
(72) Erfinder: Übelacker, Roland, 92536 Pfreimd (DE); Hägler, Thomas, 92533 Wernberg-Köblitz (DE)
(74) Vertreter: Hannke Bittner & Partner mbB Regensburg

(56) Entgegenhaltungen:
- DE-A1- 102009 037 748
- US-A- 782 823

## Beschreibung

Die Erfindung betrifft eine Sitzanordnung für ein Personentransportmittel umfassend ein Rahmenelement, an welchem ein Rückenlehnenelement und ein Sitzteil angeordnet sind.

Derartige Personentransportmittel sind beispielsweise Schienenfahrzeuge wie Züge, U-Bahnen, Trambahnen etc. oder Busse. Dabei ist der Brandschutz in Personentransportmitteln besonders wichtig. Ein Hitze- und/oder Brandherd auf dem Sitzteil eines Fahrgastsitzes können größere Brände verursachen und somit zu schwerwiegenden Schäden in dem Personentransportmittel und/oder zu Gefährdungen von Fahrgästen führen. In diesem Zusammenhang wurden die Anforderungen für Fahrgastsitze in der Europäischen Brandnorm EN 45545 Ausgabe August 2020 weiter verschärft.

Aus dem Stand der Technik ist das Dokument US 782 823 A bekannt, welches ein Sitzpolster für Eisenbahnwagensitze, bestehend aus einem Kastenrahmen aus Metall mit Bodenflanschen zeigt. Auf den Flanschen sind Querlatten aus Metall angeordnet, auf welchen Spiralfedern und Endlosfedern aus Stahlblech, deren Enden an der Außenfläche des Kastenrahmens in der Nähe der Oberseite befestigt sind, vorgesehen sind. Ferner ist eine die Federn und den Kastenrahmen bedeckende Polsterung vorgesehen.

Das Dokument DE 10 2009 037 748 A1 zeigt eine Passagiersitzvorrichtung, die eine Sitzkomponente und ein Sitzteil mit einer Bespannungseinheit zum Spannen eines Bespannungsteils umfasst, die eine Kopplungseinheit zur Kopplung am Bespannungsteil aufweist. Die Kopplungseinheit ist dazu vorgesehen, beim Vorhandensein einer Sitzkraft eine Bewegung relativ zur Sitzkomponente auszuführen.

Aufgabe der vorliegenden Erfindung ist eine Sitzanordnung bereitzustellen, welche einen verbesserten Brandschutz bereitstellt.

Die Aufgabe wird durch den Gegenstand des unabhängigen Anspruchs1 gelöst. Vorteilhafte Ausgestaltungen sind den Unteransprüchen zu entnehmen.

Kerngedanke der Erfindung ist eine Sitzanordnung für ein Personentransportmittel umfassend ein Rahmenelement, an welchem ein Rückenlehnenelement und ein Sitzteil angeordnet sind, wobei die Sitzanordnung zumindest eine Hitze-/ Feuerabschirmeinrichtung umfasst, welche zumindest ein plattenartiges Element umfasst, wobei die zumindest eine Hitze-/ Feuerabschirmeinrichtung derart ausgestaltet und dafür vorgesehen ist, dass bei Auftreten eines Hitze- und/oder Brandherdes eine zumindest abschnittsweise Verlagerung des zumindest einen plattenartigen Elements zu dem Hitze- und/oder Brandherd hin oder eine zumindest abschnittsweise Verformung des zumindest einen plattenartigen Elements zu dem Hitze- und/oder Brandherd hin erfolgt.

Durch die Verlagerung oder Verformung des zumindest einen plattenartigen Elements zu dem Hitze- und/oder Brandherd hin wird dieser von oben durch das zumindest eine plattenartige Element zumindest teilweise abgedeckt. Das zumindest eine plattenartige Element dient demnach als eine effektive Hitze-/ Feuerabschirmung, welche eine Ausbreitung des Brandes auf effektive und einfache Art und Weise eindämmt beziehungsweise verhindert. Vorteilhafterweise wird unter einer Verformung eine Biegung des zumindest einen plattenartigen Elements zu dem Hitze- und/oder Brandherd hin verstanden.

Es ist von Vorteil, dass das zumindest eine plattenartige Element zumindest teilweise aus einem feuerfesten Material und/oder einem Metall besteht.

Die Sitzanordnung erstreckt sich entlang einer Höhenachse Z, einer Tiefenachse X und einer Breitenachse Y.

Oftmals entsteht der Hitze- und/oder Brandherd auf dem Sitzteil der Sitzanordnung, beispielsweise ausgelöst durch Unachtsamkeiten oder Vandalismus. Demnach ist es von Vorteil, dass die zumindest eine Hitze-/ Feuerabschirmeinrichtung entlang der Höhenachse Z oberhalb des Sitzteils angeordnet ist. Demnach ist vorteilhafterweise die zumindest eine Hitze-/ Feuerabschirmeinrichtung derart ausgestaltet und dafür vorgesehen, dass bei Auftreten eines Hitze- und/oder Brandherdes am Sitzteil eine zumindest abschnittsweise Verlagerung des zumindest einen plattenartigen Elements zu dem Sitzteil hin oder eine zumindest abschnittsweise Verformung des zumindest einen plattenartigen Elements zu dem Sitzteil hin erfolgt. Denkbar wäre jedoch auch, dass die zumindest eine Hitze-/ Feuerabschirmeinrichtung sich an einer anderweitigen dafür geeigneten (optimalen) Position in oder an der Sitzanordnung befindet.

Ein Hitze- oder Brandherd wird somit durch die zumindest eine Hitze-/ Feuerabschirmeinrichtung abgeschirmt. Es wird somit verhindert, dass die Rückenlehne der Sitzanordnung Feuer fängt. Weiterhin wird verhindert, dass ein Brand auf die Einrichtung des Personentransportmittels über der Sitzanordnung übergreift.

Nach einer besonders bevorzugten Ausführungsform ist die zumindest eine Hitze-/ Feuerabschirmeinrichtung zumindest teilweise, bevorzugt gänzlich in dem Rückenlehnenelement integriert. Vorteilhafterweise ist die zumindest eine Hitze-/ Feuerabschirmeinrichtung in einem unteren Abschnitt des Rückenlehnenelements angeordnet. Vorteilhafterweise entspricht der untere Abschnitt im Wesentlichen den zur Abstützung des Lendenwirbelbereichs vorgesehenen Abschnitts des Rückenlehnenelements.

Nach einer weiteren bevorzugten Ausführungsform umfasst das Rückenlehnenelement zumindest eine Polsterschicht. Denkbar wäre, dass lediglich eine oder mehrere Polsterschichten vorgesehen sind. Vorteilhafterweise ist auf der Polsterschicht noch ein Bezug vorgesehen. Bevorzugt ist das zumindest eine plattenartige Element innerhalb der zumindest einen Polsterschicht oder entlang einer Tiefenachse (X) hinter der zumindest einen Polsterschicht angeordnet. Demnach ist es denkbar, dass die zumindest eine Hitze-/ Feuerabschirmeinrichtung beziehungsweise das zumindest eine plattenartige Element innerhalb eines Polsterelements angeordnet ist. Denkbar wäre jedoch auch, dass entlang der Tiefenachse X, d.h. zwischen dem Insassen und dem zumindest einen plattenartigen Element zumindest eine Polsterschicht vorgesehen ist. Vorzugsweise kann auch entlang der Tiefenachse X hinter dem zumindest einem plattenartigen Element eine Polsterschicht vorgesehen sein. Denkbar wären auch noch weitere Zwischenschichten zwischen Bezug und Polsterschicht und/oder zwischen der Polsterschicht und der zumindest einen Hitze-/ Feuerabschirmeinrichtung. Die zumindest eine Hitze-/ Feuerabschirmeinrichtung stellt somit keine Einbuße im Hinblick auf den Komfort des Insassen dar. Durch die zumindest eine Polsterschicht ist das zumindest eine plattenartige Element durch den Insassen kaum spürbar.

Nach einer vorteilhaften Ausführungsform ist es vorgesehen, dass bei Auftreten eines Hitze- und/oder Brandherds die zumindest eine Polsterschicht beziehungsweise weitere Schichten, welche vor dem zumindest einem plattenartigen Element vorgesehen sind, zunächst durch die Hitze- und/oder Brandeinwirkung in deren Stabilität geschwächt oder beschädigt wird. Durch diese Schwächung oder Beschädigung verhindern diese Schichten nicht mehr, die Verlagerung oder Verformung des zumindest einen plattenartigen Elements zu dem Hitze- und/oder Brandherds. Denkbar wäre auch, dass die Polsterschicht und die gegebenenfalls vorgesehenen weiteren Schichten vor dem zumindest einem plattenartigem Element Sollbruchstellen aufweisen, welche eine Verlagerung oder Verformung bei einer Hitze oder Brandeinwirkung ermöglichen. Denkbar wäre auch, dass die Polsterschicht und die gegebenenfalls vorgesehenen weiteren Schichten vor dem zumindest einem plattenartigem Element eine Ausnehmung im Bereich des zumindest einem plattenartigem Elements aufweisen, wobei auf dem zumindest einem plattenartigem Element eine getrennte Polsterschicht beziehungsweise gegebenenfalls vorgesehenen weiteren Schichten angeordnet sind.

Nach einer weiteren bevorzugten Ausführungsform umfasst das Rahmenelement zwei entlang einer Breitenachse (Y) voneinander beabstandete Schenkelelemente. Vorteilhafterweise sind die Schenkelelemente im Wesentlichen L-förmig ausgebildet. Die Schenkelelemente können vorteilhafterweise an der Karosserie des Personentransportmittels angeordnet sein. Alternativ können die Schenkelelemente an einem Fußelement oder einem Sitzunterbau angebracht sein. Das Sitzteil und das Rückenlehnenelement sind an diesem Schenkelelementen angeordnet.

Das Rahmenelement kann für einen Einzelsitzplatz vorgesehen sein. Denkbar wäre, dass das Rahmenelement ein Teil eines größeren Rahmelements ist, welches beispielsweise einen Mehrsitzer oder Doppelsitzer bereitstellen kann. Das Rahmenelement kann aus einem Metall, einer Metalllegierung oder einem Kunststoff hergestellt sein. Vorzugsweise besteht das Rahmenelement aus Aluminium, Stahl, Magnesium oder einer Legierung umfassend zumindest eines dieser Materialien.

Nach einer weiteren bevorzugten Ausführungsform umfasst die zumindest eine Hitze-/ Feuerabschirmeinrichtung eine Lagerungseinrichtung, mittels welcher das zumindest eine plattenartige Element an dem Rahmenelement angeordnet ist. Vorteilhafterweise erstreckt sich die Lagerungseinrichtung zwischen den Schenkelelementen des Rahmenelements. Bevorzugt ist das zumindest eine plattenartige Element mittig zwischen den beiden Schenkelelementen angeordnet. Vorteilhafterweise ist die Lagerungseinrichtung stabartig ausgebildet.

Nach einer weiteren bevorzugten Ausführungsform weist das zumindest eine plattenartige Element zumindest einen ersten Abschnitt auf, welcher sich bei einer Wärmeeinwirkung verformt. Vorteilhafterweise ist der zumindest erste Abschnitt derart ausgebildet, dass bei einer Hitze-/ Brandeinwirkung das zumindest eine plattenartige Element sich zu dem Hitze- oder Brandherd hin verformt. Vorzugsweise ist der zumindest eine erste Abschnitt aus Thermobimetall ausgebildet. Ein Thermobimetall besteht in der Regel aus zwei übereinander liegenden Schichten unterschiedlicher Metalle. Die beiden Schichten sind miteinander stoffschlüssig oder durch formschlüssiges Material verbunden. Aufgrund unterschiedlicher Wärmeausdehnungskoeffizienten der verwendeten Metalle dehnt sich eine der Schichten stärker aus als die andere, wodurch sich das Ensemble verformt, beziehungsweise verbiegt. Vorteilhafterweise ist der zumindest eine erste Abschnitt streifenartig ausgebildet. Ferner ist es von Vorteil, dass das zumindest eine plattenartige Element zumindest einen zweiten Abschnitt aufweist, welcher an dem zumindest einem Abschnitt angeordnet ist. Bevorzugt ist der zweite Abschnitt entlang der Höhenachse oberhalb des ersten Abschnitts angeordnet. Der zweite Abschnitt kann dabei vorteilhafterweise aus einem Metall oder einem feuerfesten Material beispielsweise ein Kunststoff bestehen. Denkbar wäre auch, dass das zumindest eine plattenartige Element mehrere erste Abschnitte und/oder mehrere zweite Abschnitte umfasst. Diese sind vorteilhafterweise derart entlang der Höhenachse Z übereinander angeordnet, dass eine gleichmäßige Verformung, beziehungsweise Biegung, zu dem Hitze- oder Brandherd hin erfolgt.

Nach einer weiteren bevorzugten Ausführungsform ist das zumindest eine plattenartige Element gänzlich aus Thermobimetall ausgebildet. Bevorzugt ist das zumindest eine plattenartige Element derart ausgebildet, dass bei einer Hitze-/ Brandeinwirkung dieses sich zu dem Hitze- oder Brandherd hin verformt beziehungsweise verbiegt.

Nach einer weiteren bevorzugten Ausführungsform umfasst die Lagerungseinrichtung einen Vorspannmechanismus, welcher eine Vorspannung für das zumindest eine plattenartige Element gegen einen Abschnitt des Rückenlehnenelements bereitstellt. Das zumindest eine plattenartige Element wird somit vorteilhafterweise mit der Vorspannung gegen einen Abschnitt des Rückenlehnenelements gedrückt. Eine Hitze- und/oder Brandeinwirkung verursacht zumindest eine Schwächung der Stabilität des Abschnitts des Rückenlehnenelements, so dass eine Verlagerung des zumindest einen plattenartigen Elements aufgrund der Vorspannung erfolgt. Der Abschnitt des Rückenlehnenelements, beziehungsweise die Polsterschicht hält somit das zumindest eine plattenartige Element in seiner Grundstellung. In dieser Grundstellung stellt der Vorspannmechanismus eine Vorspannung bereit. Tritt nun ein Hitze- und/oder Brandherd vorzugsweise auf dem Sitzteil, auf, wird durch dessen Wirkung der Abschnitt des Rückenlehnenelements, demnach die Polsterschicht und gegebenenfalls der Bezug und weitere Schichten, beschädigt, so dass die Stabilität des Abschnitts des Rückenlehnenelements geschwächt wird. Ab einem gewissen Grad der Schwächung ist die Vorspannung ausreichend, um das zumindest eine plattenartige Element anzutreiben und somit eine Verlagerung des zumindest einen plattenartigen Elements zu dem Hitze und/oder Brandherd hin zu verursachen.

Vorzugsweise umfasst der Vorspannmechanismus eine Torsionsfeder, auch Drehfeder genannt. Vorzugsweise sind zwei Torsionsfedern vorgesehen. Selbstverständlich sind auch noch anderweitige Elemente denkbar, welche eine Vorspannung erzeugen können, beispielsweise Druckfedern oder elastische Elemente.

Nach einer weiteren Ausführungsform kann das zumindest eine plattenartige Element zumindest einen Rahmen umfassen, an welchem eine Bespannung angeordnet ist. Die Bespannung besteht bevorzugt aus einem feuerfesten Material und/oder einem "Fireblocker". Als Fireblocker werden flammhemmende stoffartige Materialen, beispielsweise Vliese bezeichnet. Der zumindest eine Rahmen kann dabei vorteilhafterweise ein Rohrrahmen oder ein Rahmen aus Streben sein. Der zumindest eine Rahmen kann vorzugsweise aus einem Metall beispielsweise Stahl hergestellt sein. Der zumindest eine Rahmen mit der feuerfesten Bespannung kann vorzugsweise gemäß der zuvor genannten Ausführungsform mit dem Vorspannmechanismus angetrieben werden. Der zumindest eine Rahmen mit der feuerfesten Bespannung kann jedoch auch in Kombination mit einem Thermobimetallstreifen verwendet werden. Demnach würde der zumindest eine Rahmen als ein zweiter Abschnitt des plattenartigen Elements ausgebildet sein.

Nach einer weiteren Ausführungsform sind mehrere Hitze-/ Feuerabschirmeinrichtungen vorgesehen. Vorteilhafterweise können diese Hitze-/ Feuerabschirmeinrichtungen plattenartige Elemente umfassen, welche verschiedene Größen aufweisen. So könnten beispielsweise entlang der Tiefenachse (X) und/oder entlang der Höhenachse (Z) und/oder entlang der Breitenachse (Y) mehrere Hitze-/ Feuerabschirmeinrichtungen mit zunehmender Größe beziehungsweise mit zunehmenden Abmessungen hintereinander angeordnet sein. Die Hitze-/ Feuerabschirmeinrichtungen können durch einen vorgestimmten Ablauf ausgelöst werden, d.h. die Verlagerung oder die Verformung der einzelnen Hitze-/ Feuerabschirmeinrichtungen ist derart vorbestimmt, dass eine Feuerausbreitung gezielt eingedämmt beziehungsweise gesteuert werden kann.

Die Aufgabe wird weiterhin von einem Personentransportmittel mit einer Sitzanordnung nach einem der vorhergehend beschriebenen Ausführungsformen gelöst.

Weitere Vorteile, Ziele und Eigenschaften der vorliegenden Erfindung werden anhand nachfolgender Beschreibung der anliegenden Figuren erläutert. Gleichartige Komponenten können in den verschiedenen Ausführungsformen gleiche Bezugszeichen aufweisen.

In den Figuren zeigen:
- Fig. 1: eine perspektivische Ansicht des Rahmenelements mit einer Hitze-/ Feuerabschirmeinrichtung nach einer Ausführungsform;
- Fig. 2: eine perspektivische Ansicht des Rahmenelements mit einer Hitze-/ Feuerabschirmeinrichtung nach einer Ausführungsform;
- Fig. 3: eine Seitenansicht des Rahmenelements mit einer Hitze-/ Feuerabschirmeinrichtung nach einer Ausführungsform;
- Fig. 4: eine Vorderansicht des Rahmenelements mit einer Hitze-/ Feuerabschirmeinrichtung nach einer Ausführungsform;
- Fig. 5: eine Schnittansicht des Rahmenelements mit einer Hitze-/ Feuerabschirmeinrichtung nach einer Ausführungsform;
- Fig. 6: eine perspektivische Ansicht des Rahmenelements mit einer Hitze-/ Feuerabschirmeinrichtung nach einer weiteren Ausführungsform;
- Fig. 7: eine perspektivische Ansicht des Rahmenelements mit einer Hitze-/ Feuerabschirmeinrichtung nach einer weiteren Ausführungsform;
- Fig. 8: eine Seitenansicht des Rahmenelements mit einer Hitze-/ Feuerabschirmeinrichtung nach einer weiteren Ausführungsform;
- Fig. 9: eine Vorderansicht des Rahmenelements mit einer Hitze-/ Feuerabschirmeinrichtung nach einer weiteren Ausführungsform;
- Fig. 10: eine Schnittansicht des Rahmenelements mit einer Hitze-/ Feuerabschirmeinrichtung nach einer weiteren Ausführungsform;
- Fig. 11: Prinzipskizze der Verformung des plattenartigen Elements
- Fig. 12: eine Schnittansicht einer Hitze-/ Feuerabschirmeinrichtung nach einer weiteren Ausführungsform
- Fig. 13: eine seitliche Schnittansicht der Sitzanordnung mit einer Hitze-/ Feuerabschirmeinrichtung;
- Fig. 14: eine Schnittansicht von oben der Sitzanordnung mit einer Hitze-/ Feuerabschirmeinrichtung.

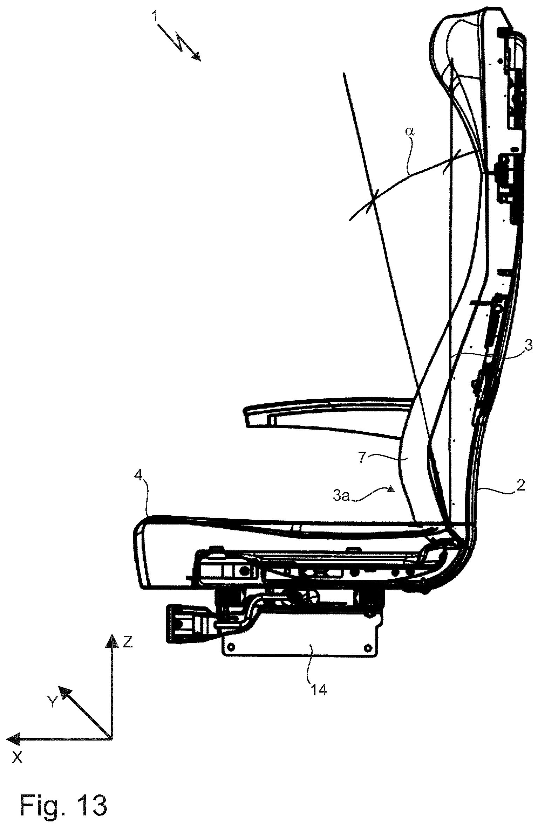

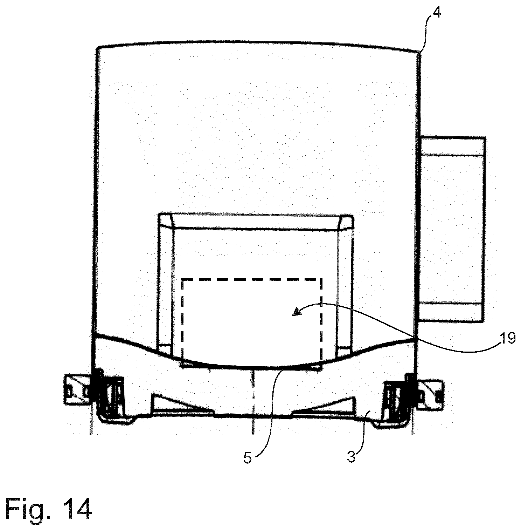

In den Figuren 13 und 14 ist eine Sitzanordnung 1 für ein Personentransportmittel dargestellt umfassend ein Rahmenelement 2, an welchem ein Rückenlehnenelement 3 und ein Sitzteil 4 angeordnet sind, wobei die Sitzanordnung 1 zumindest eine Hitze-/ Feuerabschirmeinrichtung 5 umfasst, welche zumindest ein plattenartiges Element 6 umfasst, wobei die Hitze-/ Feuerabschirmeinrichtung 5 derart ausgestaltet und dafür vorgesehen ist, dass bei Auftreten eines Hitze- und/oder Brandherdes eine zumindest abschnittsweise Verlagerung des zumindest einen plattenartigen Elements 6 zu dem Hitze- und/oder Brandherd hin oder eine zumindest abschnittsweise Verformung des zumindest einen plattenartigen Elements 6 zu dem Hitze- und/oder Brandherd hin erfolgt.

Die Sitzanordnung 1 erstreckt sich entlang einer Höhenachse Z, einer Tiefenachse X und einer Breitenachse Y.

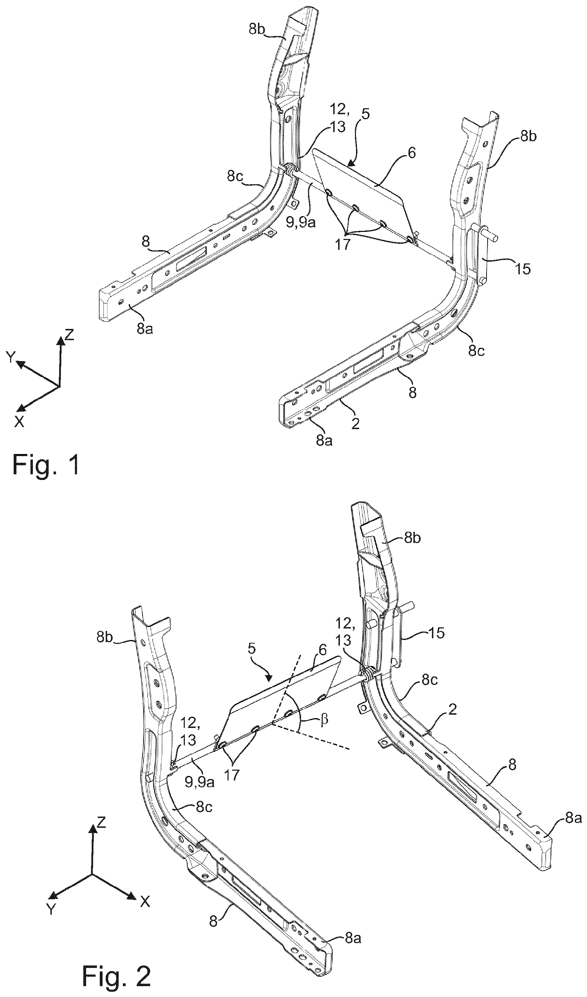

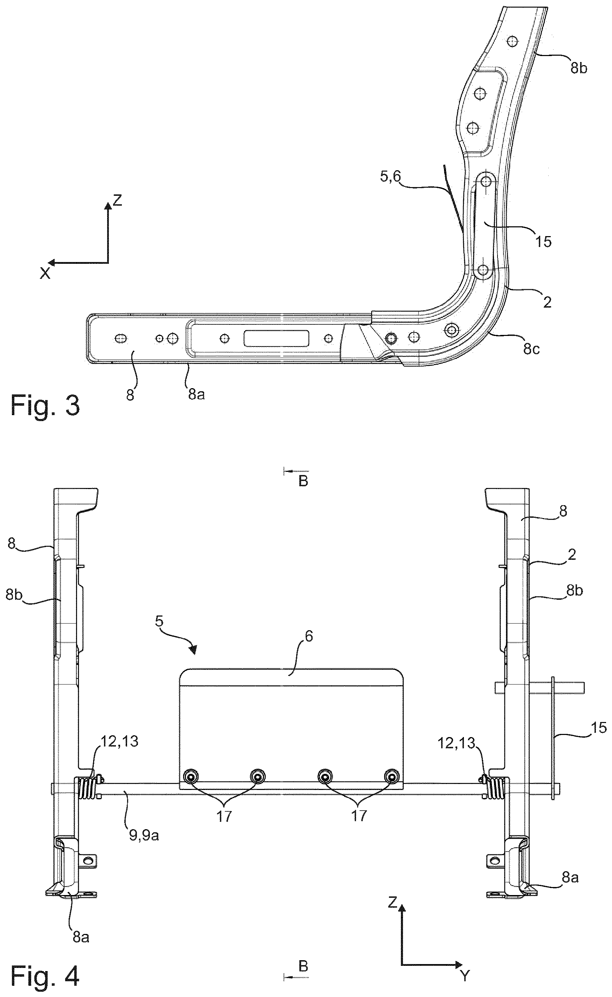

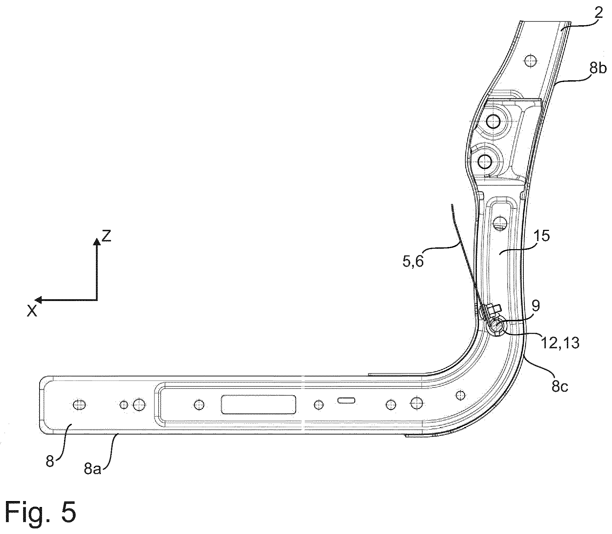

In den Figuren 1 bis 5 ist ein Rahmenelement 2 dargestellt, welches eine Hitze-/ Feuerabschirmeinrichtung 5 nach einer ersten Ausführungsform darstellt. Diese Hitze-/ Feuerabschirmeinrichtung 5 ist derart ausgestaltet und dafür vorgesehen, dass bei Auftreten eines Hitze- und/oder Brandherdes eine zumindest abschnittsweise Verlagerung des plattenartigen Elements 6 zu dem Hitze- und/oder Brandherd hin erfolgt. Vorliegend wird lediglich eine Hitze-/ Feuerabschirmeinrichtung 5 mit einem plattenartigen Element dargestellt, dies soll jedoch keine Beschränkung der Allgemeinheit darstellen.

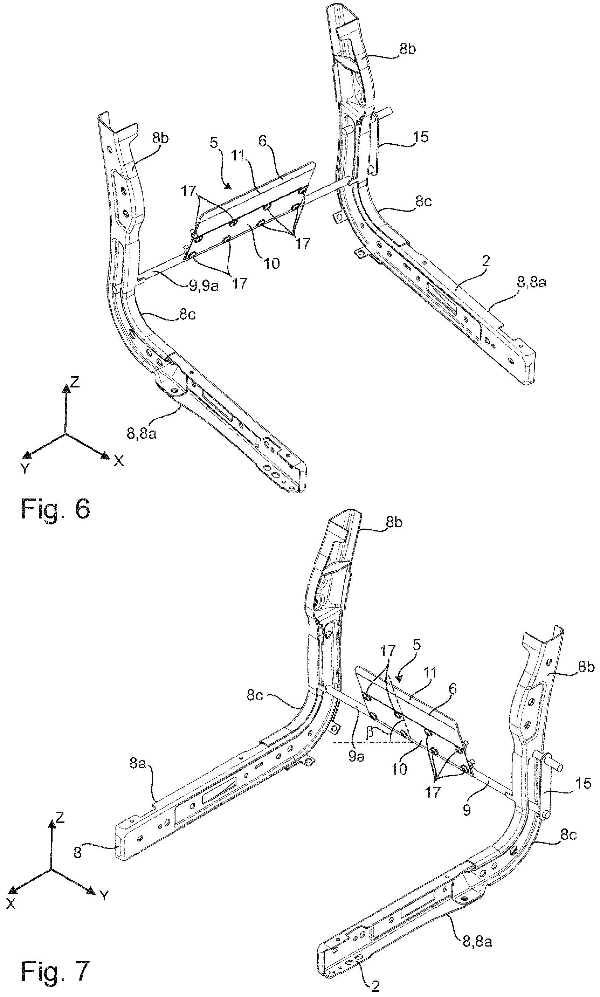

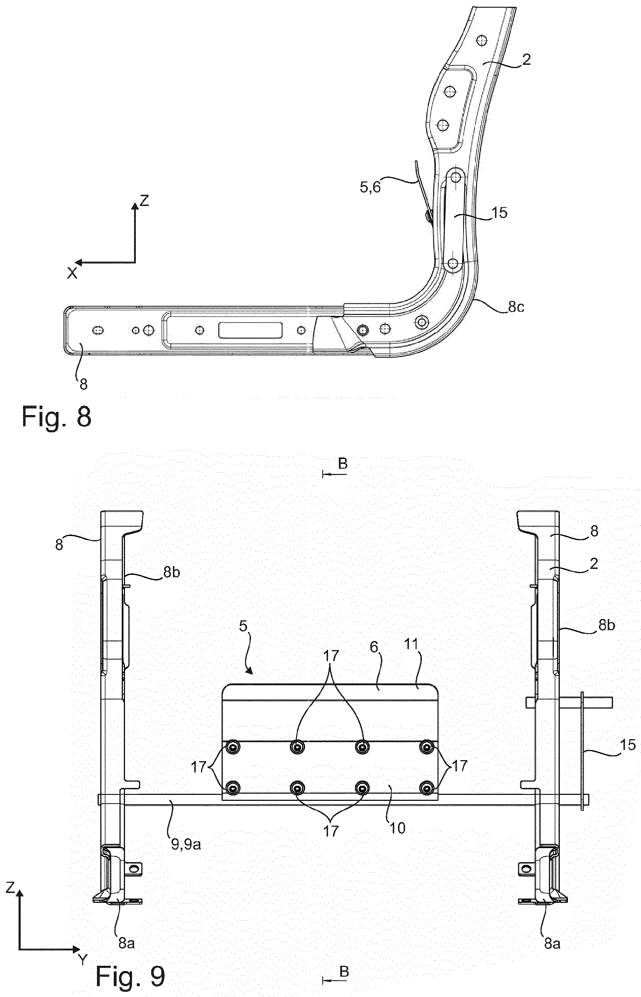

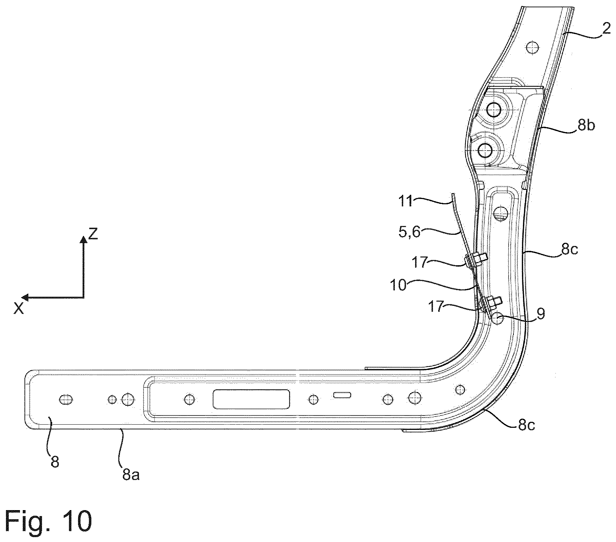

In den Figuren 6 bis 10 ist ein Rahmenelement 2 dargestellt, welches eine Hitze-/ Feuerabschirmeinrichtung 5 nach einer ersten Ausführungsform darstellt. Diese Hitze-/ Feuerabschirmeinrichtung 5 ist derart ausgestaltet und dafür vorgesehen, dass bei Auftreten eines Hitze- und/oder Brandherdes eine zumindest abschnittsweise Verformung, insbesondere eine Verbiegung des plattenartigen Elements 6 zu dem Hitze- und/oder Brandherd hin erfolgt.

Zunächst werden die Merkmale beschrieben, welche beide Ausführungsformen gemeinsam haben.

Aus Figur 13 ist zu erkennen, dass die Hitze-/ Feuerabschirmeinrichtung 5 zumindest teilweise in dem Rückenlehnenelement 3 integriert ist und in einem unteren Abschnitt 3a des Rückenlehnenelements 3 angeordnet ist. Das Rückenlehnenelement 3 umfasst zumindest eine Polsterschicht 7. Dabei ist das zumindest eine plattenartige Element 6 innerhalb der zumindest einen Polsterschicht 7 oder entlang einer Tiefenachse X hinter der zumindest einen Polsterschicht 7 angeordnet. Auf der Polsterschicht 7 kann weiterhin ein Bezug vorgesehen sein. Ferner ist denkbar, dass weitere Zwischenschichten vorgesehen sind. Die Hitze-/ Feuerabschirmeinrichtung 5 ist im Normalzustand für einen Insassen somit weder sichtbar noch spürbar.

Weiterhin ist aus den Figuren erkennbar, dass das plattenartige Element 6 geneigt angeordnet ist. Das plattenartige Element 6 schließt mit einer Achse, welche parallel zu der Höhenachse Z verläuft, einen Winkel α ein. Der Winkel α ist vorzugsweise in einem Bereich zwischen 5° und 30°, weiter bevorzugt in einem Bereich zwischen 10° und 20° weiter bevorzugt in einem Bereich zwischen 12° und 18°.

Aus den Figuren 1 bis 10 ist ersichtlich, dass das Rahmenelement 2 zwei entlang einer Breitenachse Y voneinander beabstandete Schenkelelemente 8 umfasst. Die Schenkelelemente 8 können direkt an dem Personentransportmittel montiert sein oder aber auch an einem Fußteil oder einem Unterbau 14. In Figur 13 ist ein entsprechender Unterbau 14 dargestellt auf welchem das Rahmenelement 2 angeordnet ist. Ein solcher Unterbau 14 kann beispielsweise auch eine Verlagerungseinrichtung umfassen, mittels welcher die Sitzanordnung 1 entlang der Tiefenachse X verlagerbar ist. Das Rahmenelement 2 kann auch ein Teil eines größeren Rahmens sein, beispielsweise einem Rahmen, welcher einen Doppelsitzer zur Verfügung stellt.

Die Schenkelelemente 8 sind im Wesentlichen L-förmig ausgebildet. Demnach umfassen die Schenkelelemente 8 einen ersten Abschnitt 8a, der sich im Wesentlichen entlang der Tiefenachse X erstreckt. Weiterhin umfassen die Schenkelelemente 8 einen zweiten Abschnitt 8b, der sich im Wesentlichen entlang der Höhenachse Z erstreckt. Der erste Abschnitt 8a ist mit dem zweiten Abschnitt 8b mittels eines kurvenförmig ausgebildeten Übergangsabschnitts 8c verbunden. An dem zweiten Abschnitt 8b kann das Rückenlehnenelement 3 beziehungsweise ein Rahmenelement 2 des Rückenlehnenelements 3 befestigt werden.

Die Hitze-/ Feuerabschirmeinrichtung 5 umfasst eine Lagerungseinrichtung 9, mittels welcher das zumindest eine plattenartige Element 6 an dem Rahmenelement 2 angeordnet ist. Denkbar wäre jedoch auch, dass die Lagerungseinrichtung 9 an dem Unterbau 14 befestigt ist. In den Figuren 1 bis 10 ist eine Ausführungsform einer Lagerungseinrichtung 9 dargestellt. Hierbei ist zu erkennen, dass sich die Lagerungseinrichtung 9 zwischen den Schenkelelementen 8 erstreckt. Die Lagerungseinrichtung 9 umfasst dabei ein stabförmiges Element 9a, welches in einer Bohrung der Schenkelelemente 8 gelagert und/oder befestigt ist. Insbesondere ist das stabförmige Element 9a in dem Übergangsabschnitt 8c der jeweiligen Schenkelelemente 8 angeordnet. Vorzugsweise ist das stabförmige Element 9a entlang der Höhenachse Z im Wesentlichen auf Höhe des Sitzteils 4 oder entlang der Höhenachse Z über dem Sitzteil 4 angeordnet. Selbstverständlich kann die Lagerungseinrichtung 9 auch an einer anderweitigen Position an den Schenkelelementen 8 gelagert und/oder befestigt sein. In den Figuren 1 bis 10 ist weiterhin ersichtlich, dass das stabförmige Element 9a durch ein Schenkelelement 8 hindurchgeführt ist und in einer Sicherungseinrichtung 15 angeordnet ist. Das stabförmige Element 9a mündet in einem Streifenelement der Sicherungseinrichtung 15, welches wiederum mit einem weiteren Stab an dem Schenkelelement 8 oberhalb der genannten Bohrung angeordnet ist.

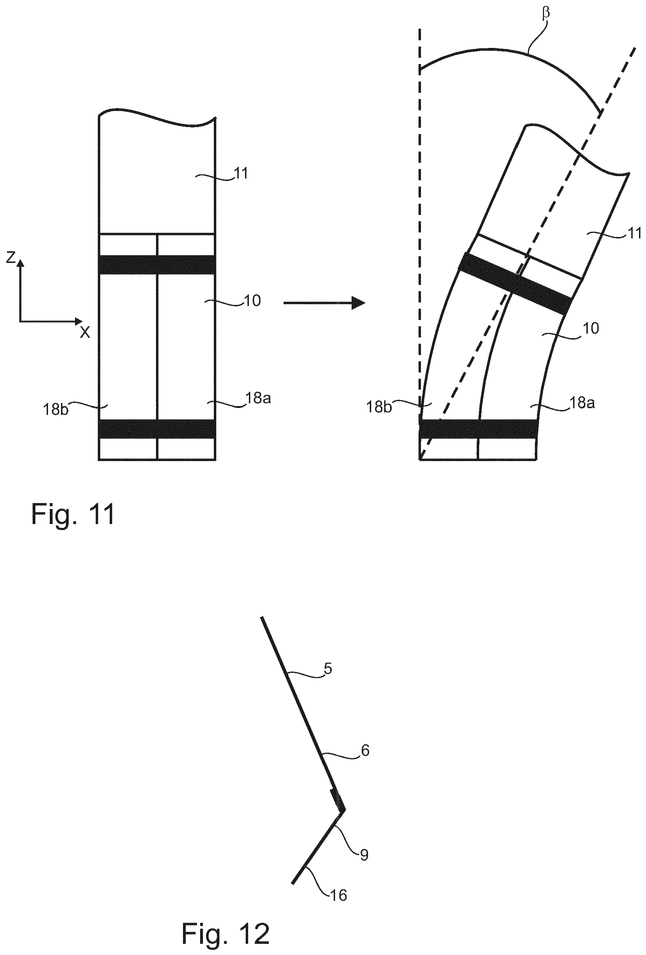

In Figur 12 ist eine alternative Lagerungseinrichtung 9 dargestellt. Die Lagerungseinrichtung 9 umfasst hierbei ein winkelförmiges Halterungselement 16, an welchem das plattenartige Element 6 angeordnet beziehungsweise befestigt ist.

Das zumindest eine plattenartige Element 6 ist vorzugsweise mittig zwischen den beiden Schenkelelementen 8 angeordnet. Ferner kann das plattenartige Element 6 eine vorteilhafte Breite in einem Bereich zwischen 15 cm und 35 cm, weiter bevorzugt zwischen 18cm und 22cm aufweisen. Ferner kann das plattenartige Element 6 eine vorteilhafte Höhe in einem Bereich zwischen 10 cm und 40 cm, weiter bevorzugt zwischen 15 cm und 20 cm aufweisen.

Nach der Ausführungsform gemäß den Figuren 1 bis 5 umfasst die Lagerungseinrichtung 9 einen Vorspannmechanismus 12, welcher eine Vorspannung für das plattenartige Element 6 gegen einen Abschnitt des Rückenlehnenelements 3 bereitstellt. Der entsprechende Abschnitt des Rückenlehnenelements 3 ist in den Figuren nicht dargestellt. Der Abschnitt des Rückenlehnenelements 3 ist die Polsterschicht 7, welche beispielsweise in Figur 13 dargestellt ist. Durch diesen Abschnitt des Rückenlehnenelements 3 wird das plattenartige Element 6 in seiner Grundstellung gehalten, wie in den Figuren 1 bis 5 gezeigt ist. Bei einem Hitz- und/oder Brandherd, beispielsweise auf dem Sitzteil 4 wird der Abschnitt des Rückenlehnenelements 3 beschädigt beziehungsweise dessen Stabilität geschwächt. Nach Überschreiten eines gewissen Grades an dieser Schwächung kann das plattenartige Element 6, angetrieben durch die Vorspannung des Vorspannmechanismus 12 zu dem Sitzteil 4 hin bewegt werden.

Der Vorspannmechanismus 12 umfasst zumindest ein Torsionsfederelement 13. Vorliegend umfasst der Vorspannmechanismus 12 zwei Torsionsfederelemente 13. Dabei ist das stabförmige Element 9a an den Schenkelelementen 8 drehbar gelagert. Insbesondere ist das stabförmige Element 9a in Durchgangsbohrungen der Schenkelelemente 8 drehbar gelagert. Das zumindest eine beziehungsweise die beiden Torsionsfederelemente 13 sind mit dem stabförmigen Element 9a und jeweils einem Schenkelelement 8 derart verbunden, dass eine Drehung des stabförmigen Elements 9a durch das Torsionsfederelement 13 vorgespannt ist.

Das plattenartige Element 6 ist mit zumindest einem Befestigungsmittel 17, beispielsweise Schrauben oder Nieten an dem stabförmigen Element befestigt. Bei einer Drehung des stabförmigen Elements 9a erfolgt somit eine Drehung des plattenartigen Elements 6 um einen Winkel β, wie in Figur 2 dargestellt. Das plattenartige Element 6 wird somit zu dem Hitze und/oder Brandherd hin bewegt beziehungsweise gedreht. Das plattenartige Element 6 kann beispielsweise als ein Metallblech ausgebildet sein mit einer Stärke in einem Bereich zwischen 0,5mm bei 2,5 mm bevorzugt 0,8 mm bis 1,2 mm.

Nach der Ausführungsform gemäß den Figuren 6 bis 10 weist das plattenartige Element 6 zumindest einen ersten Abschnitt 10 auf, welcher sich bei einer Wärmeeinwirkung verformt. Dabei ist der erste Abschnitt 10 derart ausgebildet ist, dass das plattenartige Element 6 sich zu dem Hitze- oder Brandherd hin verformt. Vorliegend ist der zumindest eine erste Abschnitt 10 aus Thermobimetall ausgebildet. Ferner ist der zumindest eine erste Abschnitt 10 streifenartig ausgebildet. Ferner weist das plattenartige Element 6 zumindest einen zweiten Abschnitt 11 auf, welcher an dem zumindest einem Abschnitt 10 angeordnet ist. Bei einer Wärmeeinwirkung, welche über einem vorbestimmten Grenzwert liegt, wird somit das plattenartige Element 6 zumindest abschnittsweise zu dem Sitzteil 4 hin verformt.

Vorliegend ist lediglich ein streifenartig ausgebildeter erster Abschnitt vorgesehen. Selbstverständlich wäre es auch denkbar, dass mehrere solche streifenartig ausgebildete erste Abschnitte 10 vorgesehen sind. Der streifenartig ausgebildete erste Abschnitt 10 erstreckt sich über die gesamte Länge des plattenartigen Elements 6.

Das stabförmige Element 9a ist vorzugsweise fest, also nicht drehbar an den Schenkelelementen 8 angeordnet. Das plattenartige Element 6 ist dabei mittels Befestigungsmitteln 17 and dem stabförmigen Element 9a befestigt. Vorliegend ist der zweite Abschnitt 11 entlang der Höhenachse Z über dem ersten Abschnitt 10 angeordnet. Der zweite Abschnitt 11 ist dabei mittels Befestigungsmitteln 17, beispielsweise Schrauben oder Nieten an dem ersten Abschnitt 10 angeordnet. Anstatt der Verwendung der Befestigungsmittel 17 ist jedoch auch die Verwendung anderer Verbindungen, wie stoffschlüssige Verbindungen, beispielsweise Klebeverbindungen denkbar. Der erste Abschnitt 10 ist somit zwischen dem stabförmigen Element 9a und dem zweiten Abschnitt 11 angeordnet. Denkbar wären jedoch auch dass mehrere streifenförmige erste Abschnitte 10 aus Thermobimetall und gegebenenfalls mehrere zweite Abschnitte 11 vorgesehen sind, welche derart angeordnet sind, dass eine gleichmäßige Verformung beziehungsweise Biegung zu dem Hitze-/Brandherd hin erfolgen kann.

Die Verformung des plattenartigen Elements 6, bei Hitze-/ Brandeinwirkung ist vorliegend eine Biegebewegung des ersten Abschnitts 11, wie in Figur 11 dargestellt, das Thermobimetall besteht aus zwei Materialien mit unterschiedlichen Ausdehnungskoeffizienten. In Figur 11 ist der erste Abschnitt 10 mit dem ersten Material 18a und dem zweiten Material 18b gezeigt. Der zweite Abschnitt 11 des plattenartigen Elements 6 ist dabei an dem ersten Abschnitt 10 angeordnet. In der linken Darstellung in Figur 11 ist dabei die Grundstellung des plattenartigen Elements 6 gezeigt. Bei einer Hitzeeinwirkung verbiegt sich der erste Abschnitt 11 zu dem Sitzteil 4 hin. Dies ist in der rechten Darstellung in Figur 11 zu sehen. Durch die Biegung ist das plattenartige Element 6 teileweise um einen Winkel β zu dem Sitzteil hin verlagert. Auch hier ist vorteilhafterweise ein Abschnitt des Rückenlehnenelements 3 durch die Hitze- oder Brandeinwirkung bereits beschädigt beziehungsweise dessen Stabilität geschwächt. Auch hier erfolgt somit eine Bewegung um einen Winkel β zu dem Hitze-/Brandherd beziehungsweise dem Sitzteil 4 hin.

Nach einer weitern nicht gezeigten Ausführungsform kann das plattenartige Element 6 gänzlich aus Thermobimetall ausgebildet sein. Dabei ist das plattenartige Element 6 derart ausgebildet, dass bei einer Hitze-/ Brandeinwirkung sich dieses zu dem Hitze- oder Brandherd beziehungsweise dem Sitzteil 4 hin verformt beziehungsweise biegt.

In Figur 14 ist eine Draufsicht auf das Sitzteil 4 und die Hitze-/ Feuerabschirmeinrichtung 5 gezeigt. Dabei ist ein Bereich 19 markiert, innerhalb dessen ein Hitz- Brandherd von der Hitze-/ Feuerabschirmeinrichtung 5 abgeschirmt werden kann. Dieser Bereich ist der wahrscheinlichste in welchem ein Hitze- /Brandherd auftritt.

Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Sitzanordnung
- 2: Rahmenelement
- 3: Rückenlehnenelement
- 3a: unterer Abschnitt des Rückenlehnenelements
- 4: Sitzteil
- 5: Hitze-/ Feuerabschirmeinrichtung
- 6: plattenartiges Element
- 7: Polsterschicht
- 8: Schenkelelemente
- 8a: erster Abschnitt der Schenkelelemente
- 8b: zweiter Abschnitt der Schenkelelemente
- 8c: Übergangsabschnitt der Schenkelelemente
- 9: Lagerungseinrichtung
- 9a: stabförmiges Element
- 10: erster Abschnitt des plattenartigen Elements
- 11: zweiter Abschnitt des plattenartigen Elements
- 12: Vorspannmechanismus
- 13: Torsionsfederelement
- 14: Unterbau
- 15: Sicherungseinrichtung
- 16: Halterungselement
- 17: Befestigungsmittel
- 18a: erstes Material
- 18b: zweites Material
- 19: Bereich
- α: Winkel
- β: Winkel
- X: Tiefenachse
- Y: Breitenachse
- Z: Höhenachse

## Patentansprüche

1. Sitzanordnung (1) für ein Personentransportmittel umfassend ein Rahmenelement (2), an welchem ein Rückenlehnenelement (3) und ein Sitzteil (4) angeordnet sind, wobei die Sitzanordnung (1) zumindest eine Hitze-/ Feuerabschirmeinrichtung (5) umfasst,
**dadurch gekennzeichnet, dass**
die zumindest eine Hitze-/ Feuerabschirmeinrichtung (5) zumindest ein plattenartiges Element (6) umfasst, wobei die zumindest eine Hitze-/ Feuerabschirmeinrichtung (5) derart ausgestaltet und dafür vorgesehen ist, dass bei Auftreten eines Hitze- und/oder Brandherdes eine zumindest abschnittsweise Verlagerung des zumindest eines plattenartigen Elements (6) zu dem Hitze- und/oder Brandherd hin oder eine zumindest abschnittsweise Verformung des zumindest einen plattenartigen Elements (6) zu dem Hitze- und/oder Brandherd hin erfolgt.

2. Sitzanordnung (1) nach Anspruch 1,
**dadurch gekennzeichnet, dass**
das zumindest eine plattenartigen Element (6) zumindest aus einem feuerfesten Material und/oder einem Metall besteht, wobei die zumindest eine Hitze-/ Feuerabschirmeinrichtung (5) zumindest teilweise in dem Rückenlehnenelement (3) integriert ist, wobei die zumindest eine Hitze-/ Feuerabschirmeinrichtung (5) in einem unteren Abschnitt (3a) des Rückenlehnenelements (3) angeordnet ist.

3. Sitzanordnung (1) nach Anspruch 1 oder 2,
**dadurch gekennzeichnet, dass**
das Rückenlehnenelement (3) zumindest eine Polsterschicht (7) umfasst, wobei das zumindest eine plattenartige Element (6) innerhalb der zumindest einen Polsterschicht (7) oder entlang einer Tiefenachse (X) hinter der zumindest einen Polsterschicht (7) angeordnet ist.

4. Sitzanordnung (1) nach einem der vorhergehenden Ansprüche,
**dadurch gekennzeichnet, dass**
das Rahmenelement (2) zwei entlang einer Breitenachse (Y) voneinander beabstandete Schenkelelemente (8) umfasst, wobei die Schenkelelemente (8) im Wesentlichen L-förmig ausgebildet sind.

5. Sitzanordnung (1) nach Anspruch 4,
**dadurch gekennzeichnet, dass**
die zumindest eine Hitze-/ Feuerabschirmeinrichtung (5) eine Lagerungseinrichtung (9) umfasst, mittels welcher das zumindest eine plattenartige Element (6) an dem Rahmenelement (2) angeordnet ist, wobei sich die Lagerungseinrichtung (9) zwischen den Schenkelelementen (8) erstreckt, wobei das zumindest eine plattenartige Element (6) mittig zwischen den beiden Schenkelelementen (8) angeordnet ist.

6. Sitzanordnung (1) nach einem der vorhergehenden Ansprüche,
**dadurch gekennzeichnet, dass**
das zumindest eine plattenartige Element (6) zumindest einen ersten Abschnitt (10) aufweist, welcher sich bei einer Wärmeeinwirkung verformt, wobei der erste Abschnitt (10) derart ausgebildet ist, dass bei einer Hitze-/ Brandeinwirkung das plattenartige Element (6) sich zu dem Hitze- oder Brandherd hin verformt, wobei der zumindest eine erste Abschnitt (10) aus Thermobimetall ausgebildet ist, wobei der zumindest eine erste Abschnitt (10) streifenartig ausgebildet ist, wobei das zumindest eine plattenartige Element (6) zumindest einen zweiten Abschnitt (11) aufweist, welcher an dem zumindest einem Abschnitt (10) angeordnet ist.

7. Sitzanordnung (1) nach einem der Ansprüche 1 bis 5
**dadurch gekennzeichnet, dass**
das zumindest eine plattenartige Element (6) gänzlich aus Thermobimetall ausgebildet ist, wobei das zumindest eine plattenartige Element (6) derart ausgebildet ist, dass bei einer Hitze- /Brandeinwirkung dieses sich zu dem Hitze- oder Brandherd hin verformt.

8. Sitzanordnung (1) nach Anspruch 6 oder 7,
**dadurch gekennzeichnet, dass**
die Lagerungseinrichtung (9) einen Vorspannmechanismus (12) umfasst, welcher eine Vorspannung für das zumindest eine plattenartige Element (6) gegen einen Abschnitt des Rückenlehnenelements (3) bereitstellt, wobei der Abschnitt des Rückenlehnenelements (3) eine Polsterschicht (7) ist, wobei eine Hitze- und/oder Brandeinwirkung zumindest eine Schwächung der Stabilität des Abschnitts des Rückenlehnenelements (3) verursacht, so dass eine Verlagerung des zumindest einen plattenartigen Elements (6) aufgrund der Vorspannung erfolgt.

9. Sitzanordnung (1) nach Anspruch 8,
**dadurch gekennzeichnet, dass**
der Vorspannmechanismus (12) zumindest ein Torsionsfederelement (13) umfasst.

10. Personentransportmittel mit einer Sitzanordnung (1) nach einem der vorhergehenden Ansprüche.

## Claims

1. Seat assembly (1) for a means of passenger transport comprising a frame element (2), on which a backrest element (3) and a seat part (4) are arranged, wherein the seat assembly (1) comprises at least one heat/fire shielding device (5),
**characterized in that**
the at least one heat/fire shielding device (5) comprises at least one plate-like element (6), wherein the at least one heat/fire shielding device (5) is configured and intended such that, upon occurrence of a heat and/or fire source, at least a partial displacement of the at least one plate-like element (6) toward the heat and/or fire source or at least a partial deformation of the at least one plate-like element (6) toward the heat and/or fire source occurs.

2. Seat assembly (1) according to claim 1,
**characterized in that**
the at least one plate-like element (6) is at least partially made of a fire-resistant material and/or a metal, wherein the at least one heat/fire shielding device (5) is at least partially integrated in the backrest element (3), wherein the at least one heat/fire shielding device (5) is arranged in a lower section of the backrest element (3a).

3. Seat assembly (1) according to claim 1 or 2,
**characterized in that**
the backrest element (3) comprises at least one cushion layer (7), wherein the at least one plate-like element (6) is arranged either within the at least one cushion layer (7) or behind the at least one cushion layer (7) along the depth axis (X).

4. Seat assembly (1) according to any one of the preceding claims,
**characterized in that**
the frame element (2) comprises two leg elements (8) spaced apart along a width axis (Y), wherein the leg elements (8) are substantially L-shaped.

5. Seat assembly (1) according to claim 4,
**characterized in that**
the at least one heat/fire shielding device (5) comprises a support device (9), by which the at least one plate-like element (6) is arranged on the frame element (2), wherein the support device (9) extends between the leg elements (8), wherein the at least one plate-like element (6) is centrally arranged between the two leg elements (8).

6. Seat assembly (1) according to any of the preceding claims,
**characterized in that**
the at least one plate-like element (6) comprises at least one first section (10) which deforms under heat exposure, wherein the first section (10) is configured such that, upon heat/fire exposure, the plate-like element (6) deforms toward the heat or fire source, wherein the at least one first section (10) is formed of thermobimetal and is strip-shaped, and wherein the at least one plate-like element (6) comprises at least one second section (11) arranged on the at least one first section (10).

7. Seat assembly (1) according to any of claims 1 to 5,
**characterized in that**
the at least one plate-like element (6) is entirely formed of thermobimetal, wherein the at least one plate-like element (6) is configured such that, upon heat/fire exposure, it deforms toward the heat or fire source.

8. Seat assembly (1) according to claim 6 or 7,
**characterized in that**
the support device (9) comprises a preload mechanism (12) which provides a preload for the at least one plate-like element (6) against a section of the backrest element (3), wherein the section of the backrest element (3) is a cushion layer (7), and wherein heat and/or fire exposure weakens the stability of the section of the backrest element (3), thereby causing displacement of the at least one plate-like element (6) due to the preload.

9. Seat assembly (1) according to claim 8,
**characterized in that**
the preload mechanism (12) comprises at least one torsion spring element (13).

10. Means of passenger transport comprising a seat assembly (1) according to any of the preceding claims.

## Revendications

1. Ensemble siège (1) pour un moyen de transport de personnes, comportant un élément cadre (2) sur lequel sont disposés un élément dossier (3) et une partie assise (4), l'ensemble siège (1) comportant au moins un dispositif de protection contre la chaleur/le feu (5),
**caractérisé par le fait que**
l'au moins un dispositif de protection contre la chaleur/le feu (5) comporte au moins un élément en forme de plaque (6), l'au moins un dispositif de protection contre la chaleur/le feu (5) étant conçu et prévu de telle sorte qu'en cas d'apparition d'un foyer de chaleur et/ou d'incendie, il se produit un déplacement au moins par sections de l'au moins un élément en forme de plaque (6) vers le foyer de chaleur et/ou d'incendie ou une déformation au moins par sections de l'au moins un élément en forme de plaque (6) vers le foyer de chaleur et/ou d'incendie.

2. Ensemble siège (1) selon la revendication 1,
**caractérisé par le fait que**
l'au moins un élément en forme de plaque (6) est constitué au moins d'un matériau ignifuge et/ou d'un métal, l'au moins un dispositif de protection contre la chaleur/le feu (5) étant au moins partiellement intégré dans l'élément dossier (3), l'au moins un dispositif de protection contre la chaleur/le feu (5) étant disposé dans une section inférieure (3a) de l'élément dossier (3).

3. Ensemble siège (1) selon la revendication 1 ou 2,
**caractérisé par le fait que**
l'élément dossier (3) comporte au moins une couche de rembourrage (7), l'au moins un élément en forme de plaque (6) étant disposé à l'intérieur de l'au moins une couche de rembourrage (7) ou le long d'un axe de profondeur (X) derrière l'au moins une couche de rembourrage (7).

4. Ensemble siège (1) selon l'une des revendications précédentes,
**caractérisé par le fait que**
l'élément cadre (2) comporte deux éléments branches (8) espacés l'un de l'autre le long d'un axe de largeur (Y), les éléments branches (8) étant réalisés sensiblement en forme de L.

5. Ensemble siège (1) selon la revendication 4,
**caractérisé par le fait que**
l'au moins un dispositif de protection contre la chaleur/le feu (5) comporte un dispositif de support (9) au moyen duquel l'au moins un élément en forme de plaque (6) est disposé sur l'élément cadre (2), le dispositif de support (9) s'étendant entre les éléments branches (8), l'au moins un élément en forme de plaque (6) étant disposé au centre entre les deux éléments branches (8).

6. Ensemble siège (1) selon l'une des revendications précédentes,
**caractérisé par le fait que**
l'au moins un élément en forme de plaque (6) présente au moins une première section (10), laquelle se déforme sous l'effet de la chaleur, la première section (10) étant conçue de telle sorte que, sous l'effet de la chaleur/de l'incendie, l'élément en forme de plaque (6) se déforme vers le foyer de chaleur ou d'incendie, l'au moins une première section (10) étant réalisée en thermobimétal, l'au moins une première section (10) étant réalisée en forme de bande, l'au moins une section en forme de plaque (6) présentant au moins une section partie (11), laquelle est disposée sur l'au moins une section (10).

7. Ensemble siège (1) selon l'une des revendications 1 à 5,
**caractérisé par le fait que**
l'au moins un élément en forme de plaque (6) est entièrement formé en thermobimétal, l'au moins un élément en forme de plaque (6) étant formé de telle sorte que, sous l'effet de la chaleur/ de l'incendie, celui-ci se déforme vers le foyer de chaleur ou d'incendie.

8. Ensemble siège (1) selon la revendication 6 ou 7,
**caractérisé par le fait que**
le dispositif de support (9) comporte un mécanisme de précontrainte (12), lequel fournit une précontrainte pour l'au moins un élément en forme de plaque (6) contre une section de l'élément dossier (3), la section de l'élément dossier (3) étant une couche de rembourrage (7), une exposition à la chaleur et/ou à l'incendie provoquant au moins un affaiblissement de la stabilité de la section de l'élément dossier (3), de telle sorte qu'un déplacement de l'au moins un élément en forme de plaque (6) se produit en raison de la précontrainte.

9. Ensemble siège (1) selon la revendication 8,
**caractérisé par le fait que**
le mécanisme de précontrainte (12) comporte au moins un élément ressort de torsion (13).

10. Moyen de transport de personnes avec un ensemble siège (1) selon l'une des revendications précédentes.
